# EUROPÄISCHE PATENTSCHRIFT

(11) **EP 1 286 832 B1**
(45) Veröffentlichungstag und Bekanntmachung des Hinweises auf die Patenterteilung: **26.11.2003**
(21) Anmeldenummer: 01951483.5
(22) Anmeldetag: 08.05.2001
(51) Int. Cl.: B32B 27/32, F16L 9/12

(54) **MEHRSCHICHTIGES ROHR**
MULTI-LAYERED PIPE
TUYAU CONSTITUE DE PLUSIEURS COUCHES

(30) Priorität: 08.06.2000 DE 20010111 U
(43) Veröffentlichungstag der Anmeldung: 05.03.2003
(73) Patentinhaber: WAVIN B.V., 8011 CW Zwolle (NL)
(72) Erfinder: STOFFELSMA, Jan, Uilke, NL-7772 XC Hardenberg (NL); KÖSTRING, Volker, 49767 Twist (DE); GUETTOUCHE, Ali, 49733 Haren/Ems (DE); SCHRÖDER, Helmut, 48480 Spelle (DE)
(74) Vertreter: Busse, Dietrich, Dipl.-Ing.
(86) Internationale Anmeldenummer: EP0105174
(87) Internationale Veröffentlichungsnummer: WO01094112

(56) Entgegenhaltungen:
- EP-A- 0 358 178
- DE-U- 29 706 045
- DE-U- 29 906 998
- FR-A- 2 701 303
- NL-C- 1 008 960

## Beschreibung

Die Erfindung betrifft ein Rohr aus gemeinsam die Rohrwand bildenden, koaxialen Schichten aus thermoplastischen Olefinen in einer Ausbildung gemäß dem Oberbegriff des Anspruchs 1.

Bei einem bekannten Rohr dieser Art (DE 299 06 998.2 U1) besteht das Rohr aus einer Außen- und einer Innenschicht, von denen die Innenschicht den FNCT-Wert bzw. den NPT-Wert eines einschichtigen Druckrohres hat und die Außenschicht einen zumindest etwa um den Faktor 3 höheren FNCT-Wert bzw. einen erhöhten NPT-Wert aufweist.

Hiervon ausgehend befaßt sich die Erfindung mit dem Problem die Beanspruchbarkeit des Rohres bei und nach der Verlegung zu erhöhen. Die Erfindung löst das Problem durch ein Rohr mit den Merkmalen des Anspruchs 1. Hinsichtlich weiterer Ausgestaltungen wird auf die Ansprüche 2 bis 10 verwiesen.

Das Rohr nach der Erfindung besteht in sämtlichen Schichten aus unvernetztem Material, so daß die Rohre endseitig problemlos mit allen normalen Verbindungstechniken wie Elektromuffen- oder Stumpfschweißen zuverlässig verbunden werden können. Das Rohr ist dabei problemlos recyclebar, da keine störenden vernetzten Bereiche vorhanden sind. Dabei hat das Rohr eine außerordentlich hohe Haltbarkeit, da das Rißwachstum in der beim Verlegen insbesondere in grabenloser Verlegetechnik kerbbeanspruchten Außenschicht sehr gering ist, was insbesondere auch bei niedrigen Temperaturen, wie sie bei erdverlegten Leitungen für Wasser, Gas etc. üblich sind, gegeben ist. Insbesondere aber widersteht das Rohr auch hohen äußeren Punktbelastungen, wie sie beispielsweise durch Steine hervorgerufen werden können, da die innerste dritte Schicht infolge ihres erhöhten FNCT- bzw. NPT-Wertes wesentlich höhere, bei Punktbelastungen auftretende Zugspannungen in der Innenschicht frei von Beschädigungen aufnehmen kann.

Die erste und die dritte Schicht können einen zumindest um etwa den Faktor 5 höheren FNCT-Wert oder einen zumindest etwa um den Faktor 2,5 höheren NPT-Wert als die zweite Schicht aufweisen, wenn dies zur Bewältigung besonderer Belastungen wünschenswert ist.

Sämtliche Schichten des Rohres sind durch Verschmelzen oder Verschweißen zu einer sich wie ein einschichtiges Rohr verhaltenden Rohreinheit verbunden, wobei das Rohr mit seinen drei Schichten einen genormten Außendurchmesser und ein genormtes Verhältnis von Außendurchmesser zu Gesamtwanddicke (SDR), das im allgemeinen 11 oder 17 beträgt, hat.

Vorteilhaft beträgt die Summe der Wanddicken der ersten und der dritten Schicht bis zu 50% der Gesamtwanddicke des Rohres, wobei zweckmäßig die Wanddicke der dritten Schicht zumindest 20% der Gesamtwanddicke des Rohres beträgt. Eine bevorzugte Ausführung sieht vor, daß die Wanddicke der ersten und dritten Schicht je 25% und die der zweiten Schicht 50% der Gesamtdicke des Rohres beträgt.

Sämtliche Schichten des Rohres bestehen vorzugsweise aus Polyäthylen hoher Dichte (PEHD), wobei die Schichten des Rohres gleichermaßen aus PE 80 oder PE 100 bestehen können. Statt dessen kann für jede Schicht auch PE 100 oder PE 80 nach freier Wahl vorgesehen werden.

Die erste und die dritte Schicht bestehen vorteilhaft aus mit Hexen copolymerisiertem PEHD mit bimodaler Molekularverteilung. Das Material zumindest der ersten Schicht des Rohres kann eine Beimischung eines die UV-Beständigkeit erhöhenden oder farbgebenden Zuschlagstoffes aufweisen.

Die erste und die dritte Schicht haben einen zumindest um den Faktor 3 höheren FNCT-Wert (Full Notched Creep Test) oder einen zumindest um den Faktor 2 höheren NPT-Wert (Notched Pipe Test) als die zweite Schicht, die den FNCT-Wert bzw. den NPT-Wert eines einschichtigen Standard-Druckrohres hat. Hinsichtlich der Durchführung des Testes für die Ermittlung der FNCT-Werte wird auf den Aufsatz von S.H. Beech, S.J. Palmer und R.W. Burbidge mit dem Titel "ACCELERATED LABORATORY TESTS TO PREDICT THE RESISTANCE TO SLOW CRACK GROWTH OF HIGH PERFORMANCE POLYETHYLENE PIPE RESINS" in 1997 International Plastic Pipe Symposium (1997), S. 205 ff, verwiesen.

Ferner wird verwiesen auf den Aufsatz von M. Fleissner mit dem Titel "Experience With a Full Notch Creep Test in Determining the Stress Crack Performance of Polyethylenes " in POLYMER ENGINEERING AND SCIENCE, Febr. 1998, Vol. 38, No. 2.

Auf der Grundlage der beschriebenen Testbedingungen beträgt bei 80° C, 4,6 Mpa und 2% Arkopal N100 als Seife der FNCT-Wert eines einschichtigen Standarf-Druckrohres aus PE 100 etwa 200-500 h und der FNCT-Wert des Materials der ersten und der dritten Schicht beträgt erfindungsgemäß etwa 600 bis 1500 h. Bei der Verwendung von mit Hexen copolymerisiertem PEHD mit bimodaler Molekurlargewichtsverteilung überschreitet der FNCT-Wert 2200 h und kann eine Größe von ca. 3000 h erreichen.

Hinsichtlich der Durchführung des Testes für die Ermittlung des NPT-Wertes wird auf den Bericht von W.J. Allwood und S.H. Beech "THE 'NOTCHED PIPE TESTS' FOR THE PERFORMANCE ASSESSMENT OF POLYETHYLENE PIPE", Plastic Fuel Gas Pipe Symposium, (1993), S.339 ff, verwiesen. Auf der Grundlage der dort beschriebenen Testsbedingungen beträgt bei 80°C und 4,6 Mpa der NPT-Wert eines einschichtigen Standard-Druckrohres aus PE 100 etwa 3000 h, und der NPT-Wert des Materials der ersten und der dritten Schicht beträgt erfindungsgemäß zumindest etwa 6000 h. Bei Verwendung von mit Hexen copolymerisiertem PEHD mit bimodaler Molekulargewichtsverteilung kann der NPT-Wert auch eine erheblich darüberliegende Größe von bis zum 7500 h erreichen.

## Patentansprüche

1. Rohr aus Schichten aus thermoplastischen Polyolefinen gleicher Art, jedoch mit unterschiedlichen Eigenschaften, die untereinander untrennbar verbunden sind, wobei eine äußere erste Schicht und eine an diese innenseitig angrenzende zweite Schicht aus unvernetztem Material bestehen, die zweite Schicht annähernd den FNCT-Wert oder den NPT-Wert eines einschichtigen Standard-Druckrohres hat und die erste Schicht einen zumindest um den Faktor 3 höheren FNCT-Wert oder einen Zumindest um den Faktor 2 höheren NPT-Wert als die zweite Schicht aufweist, **dadurch gekennzeichnet, daß** eine an die zweite Schicht innenseitig angrenzende dritte Schicht vorgesehen ist, die ebenfalls aus unvernetztem Material besteht und einen zumindest um den Faktor 3 höheren FNCT-Wert oder einen zumindest um den Faktor 2 höheren NPT-Wert als die zweite Schicht hat.

2. Rohr nach Anspruch 1, **dadurch gekennzeichnet, daß** die erste und die dritte Schicht einen zumindest um etwa den Faktor 5 höheren FNCT-Wert oder einen zumindest etwa um den Faktor 2,5 höheren NPT-Wert als die zweite Schicht aufweisen.

3. Rohr nach Anspruch 1 oder 2, **dadurch gekennzeichnet, daß** sämtliche Schichten des Rohres durch Verschmelzen oder Verschweißen zu einer sich wie ein einschichtiges Rohr verhaltenden Rohreinheit verbunden sind.

4. Rohr nach einem der Ansprüche 1 bis 3, **dadurch gekennzeichnet, daß** die Summe der Wanddicken der ersten und der dritten Schicht bis zu 50% der Gesamtwanddicke des Rohres beträgt.

5. Rohr nach Anspruch 4, **dadurch gekennzeichnet, daß** die Wanddicke der dritten Schicht zumindest 20% der Gesamtwanddicke des Rohres beträgt.

6. Rohr nach einem der Ansprüche 1 bis 5, **dadurch gekennzeichnet, daß** sämtliche Schichten des Rohres aus Polyäthylen hoher Dichte (PEHD) bestehen.

7. Rohr nach einem der Ansprüche 1 bis 6, **dadurch gekennzeichnet, daß** sämtliche Schichten des Rohres aus PE 80 und/oder PE 100 bestehen.

8. Rohr nach einem der Ansprüche 1 bis 7, **dadurch gekennzeichnet, daß** das Material der ersten und der dritten Schicht des Rohres aus mit Hexen copolymerisiertem PEHD mit bimodaler Molekulargewichtsverteilung besteht.

9. Rohr nach einem der Ansprüche 1 bis 8, **dadurch gekennzeichnet, daß** das Material der Außenschicht des Rohres eine Beimischung eines die UV-Beständigkeit erhöhenden Zuschlagstoffes aufweist.

10. Rohr nach einem der Ansprüche 1 bis 9, **dadurch gekennzeichnet, daß** das Material der Außenschicht des Rohres eine Beimischung eines farbgebenden Zuschlagstoffes aufweist.

## Claims

1. Pipe comprising of layers of thermoplastic polyolefines of the same type but having different properties which are inseparably bonded to one another, whereby an outer first layer and a second layer adjacent to the inner side thereof consist of non-cross-linked material, where the second layer has approximately the FNCT-value or the NPT-value of a single-layer standard pressure pipe and the first layer has an FNCT-value greater at least by a factor of three or an NPT-value greater at least by a factor of two than that of the second layer, **characterised in that** a third layer is provided which is adjacent to the inner side of the second layer and which also consists of non-cross-linked material and has an FNCT-value greater at least by a factor of three or an NPT-value greater by at least a factor of two than that of the second layer.

2. Pipe in accordance with claim 1, **characterisad in that** the first and the third layers exhibit an FNCT-value greater by a factor of at least about five or an NPT-value greater by a factor of at least about 2.5 when compared with that of the second layer.

3. Pipe in accordance with claim 1 or 2, **characterised in that** all the layers of the pipe are bonded together by melting or welding to form a pipe unit which behaves as a single-layer pipe.

4. Pipe in accordance with one of the claims I to 3, **characterised in that** the combined thickness of the walls of the first and third layers amount to up to 50% of the total wall-thickness of the pipe.

5. Pipe in accordance with claim 4, **characterised in that** the wall-thickness of the third layer amounts to at least 20% of the total wall-thickness of the pipe.

6. Pipe in accordance with one of the claims 1 to 5, **characterised in that** all the layers of the pipe are made of high-density polyethylene (PEHD).

7. Pipe in accordance with one of the claims 1 to 6, **characterised in that** all the layers of the pipe are made of PE 80 and / or PE 100.

8. Pipe in accordance with one of the claims 1 to 7, **characterised in that** the material of the first and the third layers of the pipe are made of PEHD having bimodal molecular weight distribution co-polymerised with hexene.

9. Pipe in accordance with one of the claims 1 to 8, **characterised in that** the material of the outer layer of the pipe is mixed with an additive which enhances resistance to UV-light.

10. Pipe in accordance with one of claims 1 to 9 **characterised in that** the material of the outer layer of the pipe is mixed with an additive which imparts colour.

## Revendications

1. Tuyau constitué de couches de polyoléfines thermoplastiques de même type mais avec des propriétés différentes, qui sont inséparablement reliées l'une à l'autre, une première couche, extérieure, et une deuxième couche adjacente à la première sur son côté intérieur étant constituées d'un matériau non réticulé, la deuxième couche présentant sensiblement l'indice FNCT ou l'indice NPT d'un tuyau à pression standard en une couche, la première couche présentant un indice FNCT supérieur d'au moins un facteur 3 à celui de la deuxième couche ou un indice NPT supérieur d'au moins un facteur 2 à celui de la deuxième couche, **caractérisé en ce qu'**une troisième couche contiguë du côté intérieur à la deuxième couche est prévue, qui est également constituée d'un matériau non réticulé et présente un indice FNCT supérieur d'au moins un facteur 3 à celui de la deuxième couche ou un indice NPT supérieur d'au moins un facteur 2 à celui de la deuxième couche.

2. Tuyau selon la revendication 1, **caractérisé en ce que** la première et la troisième couche présentent un indice FNCT supérieur d'un facteur d'environ 5 à celui de la deuxième couche ou un indice NPT supérieur d'un facteur d'environ 2,5 à celui de la deuxième couche.

3. Tuyau selon la revendication 1 ou 2, **caractérisé en ce que** toutes les couches du tuyau sont reliées par fusion ou par soudage pour former une unité de tuyau qui se comporte comme un tuyau en une couche.

4. Tuyau selon l'une quelconque des revendications 1 à 3, **caractérisé en ce que** la somme des épaisseurs des parois de la première et de la deuxième couche représente jusque 50% de l'épaisseur de paroi totale du tuyau.

5. Tuyau selon la revendication 4, **caractérisé en ce que** l'épaisseur de paroi de la troisième couche représente au moins 20% de l'épaisseur de paroi totale du tuyau.

6. Tuyau selon l'une quelconque des revendications 1 à 5, **caractérisé en ce que** toutes les couches du tuyau sont réalisées en polyéthylène à haute densité (PEHD).

7. Tuyau selon l'une quelconque des revendications 1 à 6, **caractérisé en ce que** toutes les couches du tuyau sont réalisées en PE 80 et/ou en PE 100.

8. Tuyau selon l'une quelconque des revendications 1 à 7, **caractérisé en ce que** le matériau de la première et de la troisième couche est constitué de PEHD copolymérisé avec du hexène avec une répartition bimodale des poids moléculaires.

9. Tuyau selon l'une quelconque des revendications 1 à 8, **caractérisé en ce que** le matériau de la couche extérieure du tuyau est mélangé à un additif qui renforce sa résistance aux UV.

10. Tuyau selon l'une quelconque des revendications 1 à 9, **caractérisé en ce que** le matériau de la couche extérieure du tuyau est mélangé à un additif colorant.
